# EUROPEAN PATENT SPECIFICATION

(11) **EP 4 385 873 B1**
(45) Date of publication and mention of the grant of the patent: **28.01.2026**
(21) Application number: 24173546.3
(22) Date of filing: 24.05.2021
(51) Int. Cl.: B62K 27/00

(54) **BIKE TRAILER**
FAHRRADANHÄNGER
REMORQUE POUR BICYCLETTE

(43) Date of publication of application: 19.06.2024
(62) Divisional of application: 21175528.5
(73) Proprietor: Thule Sweden AB, 335 04 Hillerstorp (SE)
(72) Inventor: PETERSSON, Maja, 331 33 Värnamo (SE); Hak, Wilbert, 568 92 Skillingaryd (SE); PERSSON, Joakim, 56831 Skillingaryd (SE)
(74) Representative: Wallentin, Lars

(56) References cited:
- DE-A1- 102017 116 064

## Description

### TECHNICAL FIELD

The present disclosure relates to a bike trailer comprising an accommodation space for a passenger. More specifically, the present disclosure relates to a bike trailer comprising a seat structure being releasably connected to the bike trailer and being adapted to be transferred between a first position and a second position. The present disclosure furthermore relates to a bike trailer comprising a seat structure being configured for moving between an upright position and a reclined position.

### BACKGROUND OF THE INVENTION

Bike trailers to which this disclosure pertains are used to transport one or two children, pets or other loads to be transported. Bike trailers are often configured to a single purpose, such as transporting either one or two kids or for transporting goods. This may necessitate using different bike trailers for different purposes or that the stability and safety of the bike trailer is affected when using the bike trailer for another purpose than the specific intended purpose, such as when using the bike trailer for one child instead of two.

Bike trailers intended to be used for multiple purposes and with a seat structure having both an upright position and a reclined position may often be cumbersome and complicated to maneuver between for users.

In view of the above, there is a need for a bike trailer which is configured for multiple purposes and/or which is easy, stable and convenient to use for different purposes and seating positions.

DE 10 2017 116064 A1 discloses a prior art bicycle trailer. §

### SUMMARY OF THE INVENTION

One or more of the above objects may be achieved with a bike trailer in accordance with claim 1. Further embodiments are set out in the dependent claims, in the following description and in the drawings.

The present disclosure relates to a bike trailer comprising a main frame. The main frame comprises a lower frame portion, a rear frame portion and two side frame portions provided on opposite lateral sides of the lower frame portion, the main frame defining an accommodation space for a passenger and/or load to be transported. The bike trailer has an extension in a longitudinal direction, in a transverse direction and in a height direction. The bike trailer comprises a seat structure forming a seating area for the passenger, the seat structure comprising a seat back and a seat bottom. The seat back is releasably connected to the bike trailer in a first position and in a second position, the first position providing a first lateral seating area for the passenger and the second position providing a centralized seating area for the passenger, as seen in the transverse direction.

Such configuration allows transfer of the seat back, such as the seat structure, between the first and second position and thereby allow alternating between a bike trailer having a first lateral seating area and a centralized seating area. The bike trailer may thus have the centralized seating area when the bike trailer is used for only one child, providing a stable and balanced configuration, and the first lateral seating area allowing a second child, a pet or a load to be transported on a second lateral seating area.

The bike trailer is a trailer adapted for coupling to a bike. The bike trailer may include a bike coupler, for example located on a front frame part of the lower frame portion. The bike coupler may be adapted to be coupled, such as stiffly coupled, to a frame of the bike, a front wheel or a rear wheel of the bike.

The main frame may frame the seat structure, as seen in the transverse direction and in the height direction. The rear frame portion may comprise an upper cross bar and the upper cross bar and the two side frame portions may frame the seat structure, providing upper and side protection for the passenger, i.e. the child, seated in the bike trailer.

The rear frame portion may comprise an upper cross bar having a central portion and first and second lateral portions provided on opposite sides of the central portion, as seen in the transverse direction. The seat back may be releasably connected to the upper cross bar at an upper end section of the seat back. The seat back may be configured for releasable connection to the upper cross bar in a first position and in a second position, the first position being arranged on the first lateral portion of the cross bar, thus providing the seat structure in the first lateral seating area for the passenger, and the second position being arranged on the central portion of the upper cross bar, thus providing the seat structure in the centralized seating area for the passenger. Such configuration provides an improved and easily accessible connection and allows transfer of the seat back, such as the seat structure, between the first and the second position.

The seat back and/or the upper cross bar may comprise a connecting member configured for releasable connection between the seat back and the upper cross bar and the connecting member may be transferable by sliding in or on the upper cross bar, such as in a track provided in the upper cross bar, between the first position and the second position. This enables convenient transfer of the seat back, such as the seat structure, between the first and second position. The seat back may comprise a seat back connecting member and the cross bar may comprise a cross bar connecting member, the seat back connecting member and the cross bar connecting member being mating connecting members.

The seat back and the seat bottom may be one integrated unit. The seat back and the seat bottom may be one integrated unit such that when the seat back is disconnected from the bike trailer, the seat back is also disconnected from the bike trailer together with the seat back. The seat back may optionally be hingedly connected to the seat back, such that the seat back may be provided in an upright position and in a reclined position. Such configuration implies that the entire seat structure, i.e. the seat back and the seat bottom, is transferred between the first and the second position.

The seat bottom may extend, as seen in the transverse direction, over the first lateral seating area and over the centralized seating area for the passenger and the seat back may be releasably connected to the seat bottom in the first position and in the second position. Such configuration allows moving only the seat back between the first and second position and thereby alternate between a bike trailer having a first lateral seating area and a centralized seating area.

The bike trailer may comprise a first and/or a second locking member and the first and/or second positions may be first and/or second locked positions, preventing movement of the seat back and/or seat structure in the transverse direction upon locking of the first and/or second locking member.

The lower frame portion may comprise a first and a second lower frame side section and a lower cross bar may extend between the first and the second lower frame side sections, the seat bottom being supported by the lower cross bar. This provides a stable configuration for the seat structure. A lower rear cross bar may additionally extend between the first and the second lower frame side sections, the seat bottom being supported also by the lower rear cross bar.

The seat structure may have a rigid base structure covering a back side of the seat back and the seat bottom respectively. The seat structure may for example have a rigid plastic base structure completely covering the back side of the seat back and the seat bottom. By back side is herein meant the side which is not intended to face the user sitting in the seat structure. A seat structure having a rigid base structure facilitates removal and repositioning of the seat structure.

The bike trailer may comprise a second seat structure forming a seating area for a second passenger. The second seat structure may comprise a seat back and a seat bottom, the seat back of the second seat structure being releasably connected to the bike trailer in a third position providing a second lateral seating area for the second passenger.

The second seat structure may comprise the features of the seat structure according to the first aspect.

The rear frame portion may comprise an upper cross bar extending between the two side frame portions. The seat back may be configured for moving between an upright position and a reclined position and the seat back may be releasably connected to the cross bar at an upper end section of the seat back via a reclining member. The reclining member may be transferable between a first configuration wherein the seat back is in the upright position and a second configuration wherein the seat back is in the reclined position, the upper end section of the seat back being provided with a greater distance from the cross bar in the second configuration than in the first configuration.

The reclining member may be an adjustable strap member, a rigid adjustable connector or a rod.

The reclining member and the upper end section of the seat back may comprise a respective mating coupling element, such as providing a snap fit connection, or a threaded connection, providing the releasable connection between the seat back and the cross bar.

The seat back may be hingedly connected to the seat bottom and the seat structure may be provided with a spring-biased member, such as a torsion spring, which biases the seat back towards the reclined position. This facilitates moving the seat back into the reclined position.

The lower frame portion may comprise a first and a second lower frame side sections and a lower cross bar may extend between the first and the second lower frame side sections, with the seat bottom being supported by the lower cross bar.

The seat structure may have a rigid base structure covering a back side of the seat back and the seat bottom respectively. The seat structure may for example have a rigid plastic base structure completely covering the back side of the seat back and the seat bottom. By back side is herein meant the side not intended to face the user sitting in the seat structure.

According to the invention, the present disclosure relates to a bike trailer comprising a main frame comprising a lower frame portion, a rear frame portion and two side frame portions provided on opposite lateral sides of the lower frame portion. The main frame defines an accommodation space for a passenger and/or load to be transported. The bike trailer has an extension in a longitudinal direction, in a transverse direction and in a height direction. The rear frame portion comprises an upper cross bar extending between the two side frame portions. The bike trailer comprises a seat structure forming a seating area for a passenger, the seat structure comprising a seat back and a seat bottom. The seat back is configured for moving between an upright position and a reclined position and the seat back connected to the cross bar at an upper end section of the seat back via a reclining member. The reclining member is transferable between a first configuration wherein the seat back is in the upright position and a second configuration wherein the seat back is in the reclined position. The upper end section of the seat back is provided with a greater distance from the cross bar in the second configuration than in the first configuration.

The bike trailer according to the invention provides an improved and robust bike trailer comprising a seat structure which may be easily adjusted between an upright position and a reclined position. Since the reclining member is directly connected to the cross bar it is easily accessible and a stable solution.

The seat back may be releasably connected to the cross bar.

The reclining member may be an adjustable strap member, a rigid adjustable connector or a rod.

The reclining member and the upper end section of the seat back may comprise a respective mating coupling element, such as providing a snap fit connection, or a threaded connection, providing the releasable connection between the seat back and the cross bar.

The seat back may be hingedly connected to the seat bottom and the seat structure may be provided with a spring-biased member, such as a torsion spring, which biases the seat back towards the reclined position. This facilitates moving the seat back into the reclined position.

The lower frame portion comprises a first and a second lower frame side sections and a lower cross bar extends between the first and the second lower frame side sections, with the seat bottom being supported by the lower cross bar.

The seat structure may have a rigid base structure covering a back side of the seat back and the seat bottom respectively. The seat structure may for example have a rigid plastic base structure completely covering the back side of the seat back and the seat bottom. By back side is herein meant the side not intended to face the user sitting in the seat structure.

### BRIEF DESCRIPTION OF THE DRAWINGS

The present invention will be further explained hereinafter by means of non-limiting examples and with reference to the appended drawings wherein:
- Fig. 1a-1c: illustrate perspective views of a bike trailer according to the present disclosure with a seat structure being connected to the bike trailer in alternative positions;
- Fig. 2a-2b: illustrate a portion of a bike trailer and seat back comprising a reclining member according to the present disclosure;
- Fig. 3: illustrates a cross sectional view of a lower frame portion and a seat structure of the bike trailer according to Fig. 1a;
- Fig, 4a: illustrates a perspective view of the bike trailer according to Fig. 1a with the seat backs being positioned in upright positions; and
- Fig, 4b: illustrates a perspective view if the bike trailer in Fig. 4a with one seat back having been repositioned into a reclined position and one seat back remaining in the upright position.

### DETAILED DESCRIPTION

It is to be understood that the drawings are schematic and that individual components are not necessarily drawn to scale. The bike trailer including the main frame, seat structure and reclining member shown in the figures are provided as examples only and should not be considered limiting to the invention. Accordingly, the scope of the invention is determined solely by the appended claims.

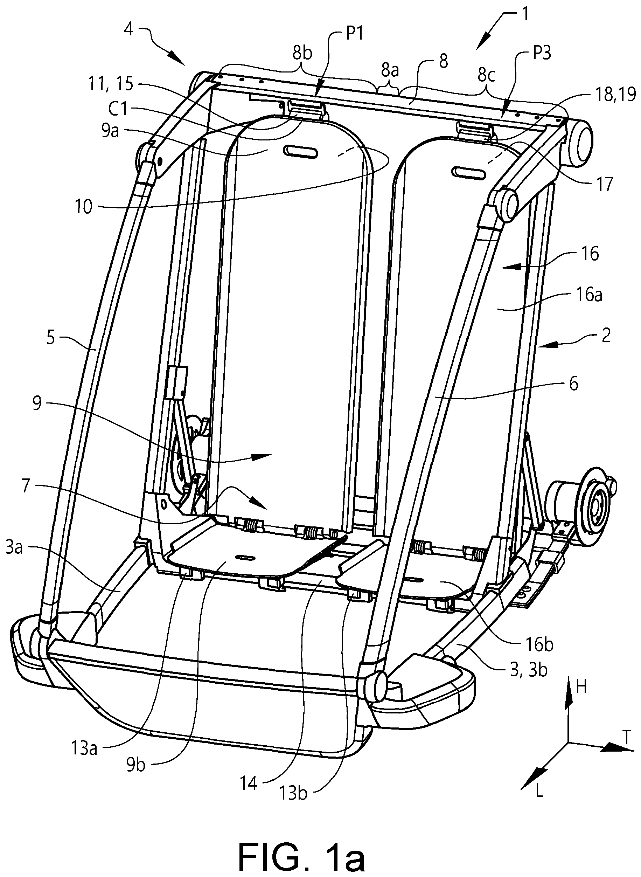

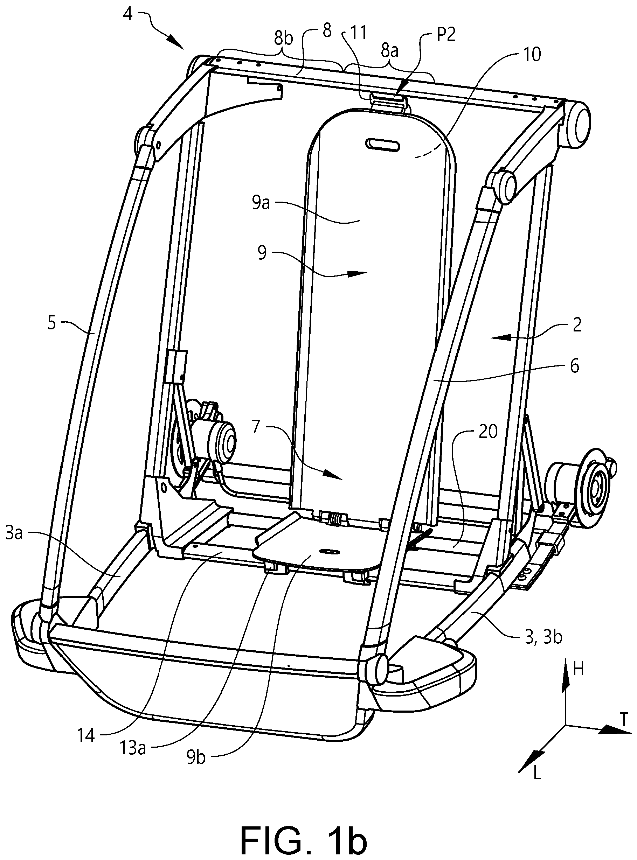

Fig. 1a shows a bike trailer 1 according to the present disclosure. The bike trailer 1 comprises a main frame 2 comprising a lower frame portion 3, a rear frame portion 4 and two side frame portions 5,6 provided on opposite lateral sides of the lower frame portion 3. The main frame 2 defines an accommodation space 7 for a passenger. The bike trailer 1 has an extension in a longitudinal direction L, corresponding to the travel direction of the bike trailer when being in use, in a transverse direction T and in a height direction H. The rear frame portion 4 comprises an upper cross bar 8 having a central portion 8a and first and second lateral portions 8b,8c provided on opposite sides of the central portion 8a of the cross bar 8, as seen in the transverse direction T. The bike trailer 1 comprises a seat structure 9 forming a seating area for the passenger, the seat structure 9 comprising a seat back 9a and a seat bottom 9b. The cross bar 8 comprises a connecting member 11 and the seat back 9a is releasably connected to the upper cross bar 8 via the connecting member 11 at an upper end section 10 of the seat back 9a. The seat back 9a is configured for releasable connection to the upper cross bar 8 in a first position P1 and in a second position P2 (shown in Fig. 1b).

The bike trailer 1 furthermore comprises a second seat structure 16 forming a second seating area for a second passenger. The second seat structure 16 comprises a second seat back 16a and a second seat bottom 16b. The second seat structure 16 is releasably connected to the second lateral portion 8c of the cross bar 8 in a third position P3 forming a second lateral seating area for a second passenger. The upper cross bar 8 comprises a second connecting member 18 configured for the releasable connection between the second seat back 16a and the upper cross bar 8.

The lower frame portion 3 of the main frame 2 comprises a first and a second lower frame side sections 3a,3b and a lower cross bar 14 extends between the first and the second lower frame side sections 3a,3b supporting the seat bottom 9b. The seat bottom 9b is in Fig. 1a releasably connected to the lower frame portion 3. The bike trailer 1 comprises a first and a second locking member 13a,13b. The first locking member 13a locks the position of the seat structure 9 in the first position P1 and the second locking member 13b locks the second seat structure 16 in the third position P3. When the seat structures 9,16 are in the respective first and second locked positions, movement of the seat structures are prevented.

The connecting member 11 and the second connecting member 18 furthermore each has the function of a respective reclining member 15,19. The seat back 9a and the second seat back 16a are configured for moving between an upright position and a reclined position, shown in Figs, 4a and 4b. The reclining members 15,19 are transferable between a first configuration C1 wherein the respective seat back 9a,16a is in the upright position and a second configuration C2 wherein the respective seat backs 9a, 16a are in the reclined position. The positioning of the respective seat backs 9a,16a are independent from each other, meaning that the seat back 9a may be in the upright position when the second seat back 16b is in the reclined position and vice versa.

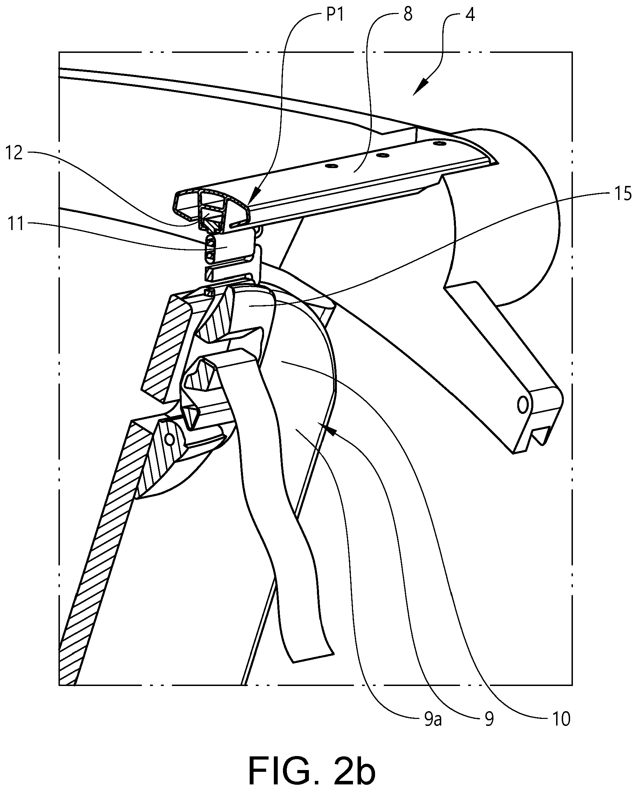

Fig. 1b illustrates the bike trailer 1 from Fig. 1a after the second seat structure 16 has been disconnected from the first lateral portion 8a of the cross bar 8 and removed from the bike trailer 1 and after the seat back 9a of the seat structure 9 has been disconnected from the first position P1 and transferred to the second position P2. The second position P2 is arranged on the central portion 8a of the upper cross bar 8 and when the seat structure 9 is arranged in the second position P2, a centralized seating area for the passenger is provided. The seat structure 9 may be transferred from the first position P1 to the second position P2 by unlocking the locking member 13a, in these Figs. provided on a releasable connection between the seat bottom 9b and the lower cross bar 14, and by sliding the seat bottom 9b over the lower cross bar 14, and over a rear lower cross bar 20 provided for supporting the seat bottom 9b and by sliding the seat back 9a in a track (shown in Fig. 2b) provided in the cross bar 8. Since the seat structure 9 is still connected to the main frame 2 while transferring the seat structure 9 between the first position P1 and second position P2, no cumbersome removal and repositioning of the seat structure 9 is needed.

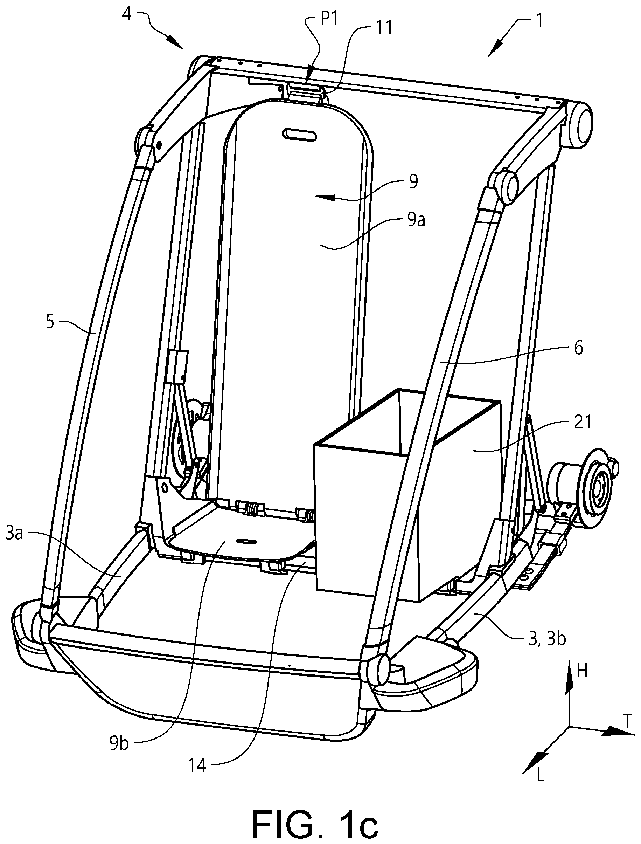

Fig. 1c illustrates the bike trailer 1 from Figs. 1a and 1b, when the seat structure 9 is connected to the cross bar 8 in the first position P1 and the first lateral seating area is provided. In the space providing a second lateral seating area in Fig. 1a, a luggage 21 is instead accommodated and releasably connected to the lower cross bar 14 and to the rear lower cross bar 20 (not shown).

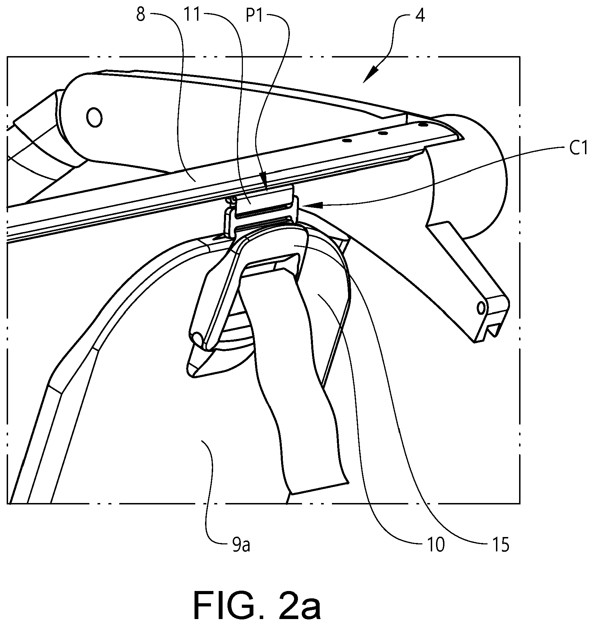

Fig. 2a illustrates the connection between the seat structure 9 and the cross bar 8 from Fig. 1a. The upper end section 10 of the seat back 9a comprises a connecting member 11 which is releasably connected to the upper cross bar 8. The connection member 11 has in this embodiment also the function of a reclining member 15. The reclining member 15 is in this illustration a strap member. The seat back 9a is in Fig. 2a shown in an upright position which may upon release of the strap provide the seat back 9a in a reclined position. Fig. 2b is a cross sectional view, illustrating the connection of the seat structure 9 to the cross bar 8 shown in Fig. 2a. As may be seen in Fig. 2a, the cross bar 8 extending from the side frame portion 5 is provided with a track 12 on a downward side facing the seat structure 9. The connecting member 11 may be transferable from the first position P1 to the second position P2 (shown in Fig. 1b) by sliding in the track 12 in the upper cross bar 8. The connecting member 11 is attached to the upper end section 10 of the seat back 9a and is a strap connected to a hook member sliding in the cross bar 8.

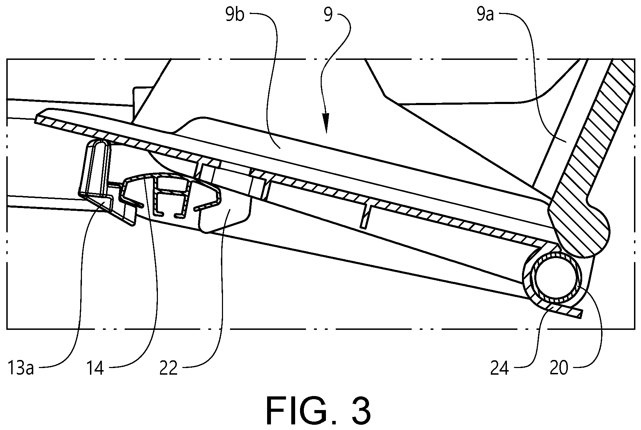

Fig. 3 illustrates a cross sectional view of a part of the seat structure 9, comprising the seat back 9a and the seat bottom 9b, the lower cross bar 14 and the rear lower cross bar 20 supporting the seat bottom 9b. The seat bottom 9b is releasably connected to the lower cross bar 14 by a seat bottom connecting member 22 and to the rear lower cross bar 20 by a seat bottom rear connecting member 24, configured to enable a sliding transfer of the seat bottom 9b over the lower cross bar 14 and over the rear lower cross bar 20. The seat bottom connecting member 22 comprises the first locking member 13a preventing movement of the seat structure 9 in the transverse direction T (shown in Fig. 1a) upon locking of the first locking member 13a.

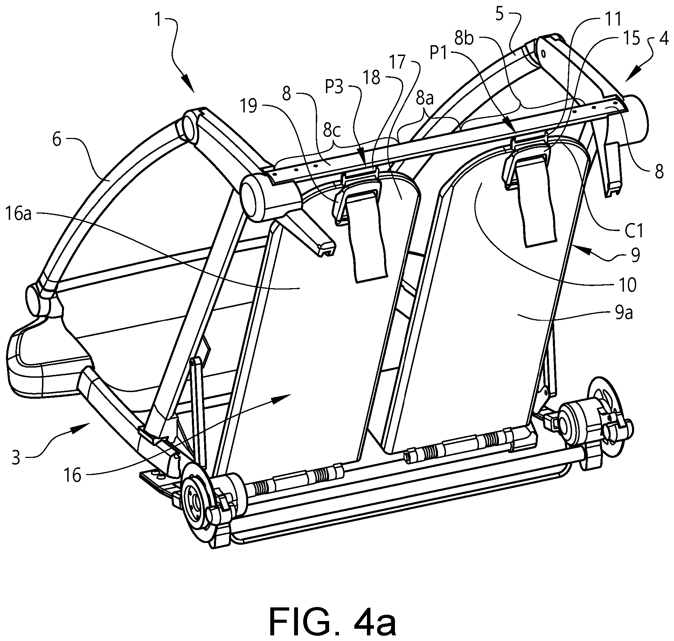

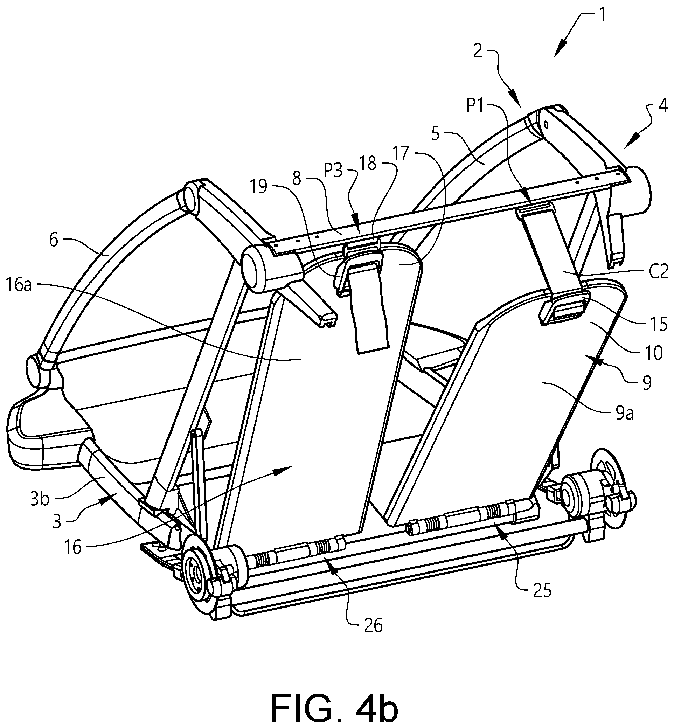

Figs. 4a and 4b illustrate a perspective view of the bike trailer from Fig. 1a as shown from a rear side of the bike trailer 1. The bike trailer 1 comprises the main frame 2 comprising the lower frame portion 3, the rear frame portion 4 and the two side frame portions 5,6 provided on opposite lateral sides of the lower frame portion 3. The rear frame portion 4 comprises the upper cross bar 8 having the central portion 8a (shown in Fig. 1b) and the first and second lateral portions 8b,8c provided on opposite sides of the central portion 8a of the cross bar 8. The bike trailer 1 comprises the seat structure 9 forming the seating area for the passenger. The bike trailer furthermore comprises the second seat structure 16 forming the second seating area for a second passenger. The seat back 9a of the seat structure 9 is releasably connected to the upper cross bar 8 via the connecting member 11 arranged at the upper end section 10 of the seat back 9a. The seat back 9a is connected to the first lateral portion 8b in the first position P1 thus forming the first lateral seating area. The second seat back 16a of the second seat structure 16 is releasably connected to the upper cross bar 8 via the second connecting member 18 arranged at the upper end section 17 of the second seat back 16a. The second seat back 16a is connected to the second lateral portion 8c of the upper cross bar 8 in the third position P3 thus forming the second lateral seating area. The second connecting member 18 is in the form of a strap also having the function of the reclining member 19.

The seat back 9a and the second seat back 16a are configured for moving between an upright position and a reclined position. The reclining members 15,19 are transferable between the first configuration C1, as illustrated in Fig. 4a, wherein the respective seat back 9a,16a is in the upright position and a second configuration C2 (not shown) wherein the respective seat backs 9a,16a are in the reclined position. Fig. 4b illustrates when the seat back 9a has been moved to the reclined position by releasing the strap 15 and providing the reclining member 15 in the second configuration C2 in which the upper end section 10 is provided at a greater distance to the cross bar 8 compared to when the reclining member 15 is in the first configuration C1. As shown in Fig. 4b, the positioning of the respective seat backs 9a, 16a are independent from each other, meaning that the seat back 9a may be in the upright position when the second seat back 16b is in the reclined position and vice versa.

The seat back 9a is hingedly connected to the seat bottom 9b and wherein the seat structure 9 is provided with a first spring-biased member 25, such as a torsion spring, which biases the seat back 9a towards the reclined position. The second seat back 16a is also hingedly connected to the second seat bottom 16b and the second seat structure 16 is provided with a second spring-biased member 26, such as a torsion spring, which biases the second seat back 16a towards the reclined position. This facilitates moving the seat back from the upright to the reclined position.

## Claims

1. A bike trailer (1), comprising a main frame (2) comprising a lower frame portion (3) that comprises a first and a second lower frame side sections (3a, 3b), the main frame (2) further comprising a rear frame portion (4) and two side frame portions (5,6) provided on opposite lateral sides of the lower frame portion (3), the main frame (2) defining an accommodation space (7) for a passenger, wherein the bike trailer (1) has an extension in a longitudinal direction (L), in a transverse direction (T) and in a height direction (H), the rear frame portion (4) comprising an upper cross bar (8) extending between the two side frame portions (5,6), the bike trailer (1) comprising a seat structure (9) forming a seating area for a passenger, the seat structure (9) comprising a seat back (9a) and a seat bottom (9b), wherein a lower cross bar (14) extends between the first and the second lower frame side sections (3a,3b), the seat bottom (9b) being supported by the lower cross bar (14), the seat back (9a) being configured for moving between an upright position and a reclined position, the seat back (9a) being connected to the upper cross bar (8) at an upper end section (10) of the seat back (9a) via a reclining member (15), the reclining member (15) being transferable between a first configuration (C1) wherein the seat back (9a) is in the upright position and a second configuration (C2) wherein the seat back (9a) is in the reclined position, and wherein the upper end section (10) of the seat back (9a) is provided with a greater distance from the upper cross bar (8) in the second configuration (C2) than in the first configuration (C1).

2. The bike trailer (1) according to claim 1, wherein the reclining member (15) is an adjustable strap member, a rigid adjustable connector or a rod.

3. The bike trailer (1) according to claim 1 or 2, wherein the reclining member (15) and the upper end section (10) of the seat back (9a) comprises a respective mating coupling element, such as providing a snap fit connection, or a threaded connection, providing the releasable connection between the seat back (9a) and the cross bar (8).

4. The bike trailer (1) according to any one of claims 1 to 3, wherein the seat back (9a) is hingedly connected to the seat bottom (9b) and wherein the seat structure (9) is provided with a spring-biased member, such as a torsion spring, which biases the seat back (9a) towards the reclined position.

5. The bike trailer (1) according to any one of claims 1 to 4, wherein the seat structure (9) has a rigid base structure covering a back side of the seat back (9a) and the seat bottom (9b) respectively.

## Patentansprüche

1. Fahrradanhänger (1), umfassend einen Hauptrahmen (2), umfassend einen unteren Rahmenabschnitt (3), der eine erste und eine zweite untere Rahmenseitensektion (3a, 3b) umfasst, der Hauptrahmen (2) ferner umfassend einen hinteren Rahmenabschnitt (4) und zwei Seitenrahmenabschnitte (5,6), die an gegenüberliegenden lateralen Seiten des unteren Rahmenabschnitts (3) bereitgestellt sind, wobei der Hauptrahmen (2) einen Unterbringungsraum (7) für einen Passagier definiert, wobei der Fahrradanhänger (1) eine Erstreckung in einer Längsrichtung (L), in einer Querrichtung (T) und in einer Höhenrichtung (H) aufweist, der hintere Rahmenabschnitt (4) umfassend eine obere Querstange (8), die sich zwischen den zwei Seitenrahmenabschnitten (5,6) erstreckt, der Fahrradanhänger (1) umfassend eine Sitzstruktur (9), die einen Sitzbereich für einen Passagier ausbildet, die Sitzstruktur (9) umfassend eine Sitzlehne (9a) und eine Sitzfläche (9b), wobei sich eine untere Querstange (14) zwischen der ersten und der zweiten unteren Rahmenseitensektion (3a,3b) erstreckt, die Sitzfläche (9b) durch die untere Querstange (14) gestützt wird, die Sitzlehne (9a) zum Bewegen zwischen einer aufrechten Position und einer geneigten Position konfiguriert ist, die Sitzlehne (9a) mit der oberen Querstange (8) an einer oberen Endsektion (10) der Sitzlehne (9a) über ein Neigungselement (15) verbunden ist, das Neigungselement (15) zwischen einer ersten Konfiguration (C1), wobei die Sitzlehne (9a) in der aufrechten Position ist, und einer zweiten Konfiguration (C2), wobei die Sitzlehne (9a) in der geneigten Position ist, überführbar ist und wobei die obere Endsektion (10) der Sitzlehne (9a) in der zweiten Konfiguration (C2) mit einem größeren Abstand von der oberen Querstange (8) als in der ersten Konfiguration (C1) bereitgestellt wird.

2. Fahrradanhänger (1) nach Anspruch 1, wobei das Neigungselement (15) ein einstellbares Gurtelement, ein starrer einstellbarer Verbinder oder ein Stab ist.

3. Fahrradanhänger (1) nach Anspruch 1 oder 2, wobei das Neigungselement (15) und die obere Endsektion (10) der Sitzlehne (9a) ein jeweiliges zusammenpassendes Kopplungselement umfassen, wie zum Bereitstellen einer Schnappverbindung oder einer Gewindeverbindung, die die lösbare Verbindung zwischen der Sitzlehne (9a) und der Querstange (8) bereitstellen.

4. Fahrradanhänger (1) nach einem der Ansprüche 1 bis 3, wobei die Sitzlehne (9a) mit der Sitzfläche (9b) gelenkig verbunden ist und wobei die Sitzstruktur (9) mit einem federvorgespannten Element bereitgestellt ist, wie einer Torsionsfeder, die die Sitzlehne (9a) in Richtung der geneigten Position vorspannt.

5. Fahrradanhänger (1) nach einem der Ansprüche 1 bis 4, wobei die Sitzstruktur (9) eine starre Basisstruktur aufweist, die eine Rückseite der Sitzlehne (9a) beziehungsweise der Sitzfläche (9b) abdeckt.

## Revendications

1. Remorque de vélo (1), comprenant un cadre principal (2) comprenant une partie de cadre inférieure (3) qui comprend une première et une seconde section latérale de cadre inférieure (3a, 3b), le cadre principal (2) comprenant en outre une partie de cadre arrière (4) et deux parties de cadre latérales (5, 6) pourvues sur des côtés latéraux opposés de la partie de cadre inférieure (3), le cadre principal (2) définissant un espace de réception (7) pour un passager, dans laquelle la remorque de vélo (1) présente une étendue dans une direction longitudinale (L), dans une direction transversale (T) et dans une direction de hauteur (H), la partie de cadre arrière (4) comprenant une barre transversale supérieure (8) s'étendant entre les deux parties de cadre latérales (5, 6), la remorque de vélo (1) comprenant une structure de siège (9) formant une zone d'assise pour un passager, la structure de siège (9) comprenant un dossier de siège (9a) et une assise de siège (9b), dans laquelle une barre transversale inférieure (14) s'étend entre la première et la seconde section latérale de cadre inférieure (3a, 3b), l'assise de siège (9b) étant supportée par la barre transversale inférieure (14), le dossier de siège (9a) étant conçu pour se déplacer entre une position redressée et une position inclinée, le dossier de siège (9a) étant relié à la barre transversale supérieure (8) au niveau d'une section d'extrémité supérieure (10) du dossier de siège (9a) par l'intermédiaire d'un élément d'inclinaison (15), l'élément d'inclinaison (15) pouvant être transféré entre une première configuration (C1) dans laquelle le dossier de siège (9a) est dans la position redressée et une seconde configuration (C2) dans laquelle le dossier de siège (9a) est dans la position inclinée, et dans laquelle la section d'extrémité supérieure (10) du dossier de siège (9a) est située à une plus grande distance de la barre transversale supérieure (8) dans la seconde configuration (C2) que dans la première configuration (C1).

2. Remorque de vélo (1) selon la revendication 1, dans laquelle l'élément d'inclinaison (15) est un élément de sangle réglable, un élément de liaison réglable rigide ou une tige.

3. Remorque de vélo (1) selon la revendication 1 ou 2, dans laquelle l'élément d'inclinaison (15) et la section d'extrémité supérieure (10) du dossier de siège (9a) comprennent un élément d'accouplement respectif, tel que fournissant une liaison par encliquetage ou une liaison filetée, assurant la liaison libérable entre le dossier de siège (9a) et la barre transversale (8).

4. Remorque de vélo (1) selon l'une quelconque des revendications 1 à 3, dans laquelle le dossier de siège (9a) est relié de manière articulée à l'assise de siège (9b) et dans laquelle la structure de siège (9) est dotée d'un élément sollicité par ressort, tel qu'un ressort de torsion, qui sollicite le dossier de siège (9a) vers la position inclinée.

5. Remorque de vélo (1) selon l'une quelconque des revendications 1 à 4, dans laquelle la structure de siège (9) a une structure de base rigide recouvrant un côté arrière du dossier de siège (9a) et de l'assise de siège (9b) respectivement.
